# FASCICULE DE BREVET EUROPEEN

(11) **EP 3 305 562 B1**
(45) Date de publication et mention de la délivrance du brevet: **06.05.2020**
(21) Numéro de dépôt: 17190009.5
(22) Date de dépôt: 07.09.2017
(51) Int. Cl.: B60K 1/04, B60K 7/00, B62D 21/18, B60K 25/02, B66F 11/04, B60F 1/04, B61D 15/12, B60M 1/28

(54) **VÉHICULE A NACELLE POUR INTERVENTION SUR VOIE FERRÉE**
FAHRZEUG MIT GONDEL FÜR EINGRIFFE AN SCHIENEN
VEHICLE WITH NACELLE FOR INTERVENTION ON RAILWAY TRACK

(30) Priorité: 07.09.2016 FR 1658319
(43) Date de publication de la demande: 11.04.2018
(73) Titulaire: Maintenance du Centre, 28630 Mignières (FR)
(72) Inventeur: PETIT, Philippe, 85100 LES SABLES D'OLONNE (FR)
(74) Mandataire: Prouvez, Julien

(56) Documents cités:
- WO-A1-2011/081593
- WO-A1-2011/129752
- DE-A1-102008 052 514
- DE-U1- 29 500 194
- US-A- 3 326 312
- US-A1- 2011 198 141
- US-A1- 2014 116 284

## Description

La présente invention concerne le domaine des infrastructures ferroviaires et plus particulièrement les véhicules utilisables pour l'installation, la réparation et la maintenance de ces infrastructures.

Dans le domaine ferroviaire, il est connu, d'une part, des véhicules à moteur thermique et, d'autre part, des véhicules à moteur électrique qui sont pourvus de moyens d'alimentation du moteur en énergie électrique à partir des caténaires s'étendant au-dessus des voies ferrées.

Lorsque les caténaires ne sont pas installées, l'alimentation en énergie des véhicules intervenant dans des espaces confinés, comme les tunnels, est problématique.

Par ailleurs, les infrastructures ferroviaires comprennent des équipements situés en hauteur comme des ponts, la partie supérieure de tunnels, des portiques, des caténaires.

L'installation, la réparation et la maintenance de ces équipements situés en hauteur nécessitent l'utilisation de bras télescopiques portant une nacelle à leur extrémité libre.

Dans le domaine ferroviaire, ces bras télescopiques sont montés sur des wagons ferroviaires, c'est-à-dire adaptés à circuler sur une voie ferrée en étant tractés ou poussés par un véhicule ferroviaire automoteur. L'acheminement du véhicule équipé du bras télescopique sur un chantier de réparation ou de maintenance d'une infrastructure ferroviaire nécessite donc que la voie ferroviaire soit dégagée, ce qui s'avère compliqué sur les voies à fort trafic.

Il est connu un véhicule sur chenilles à partir duquel se déploie verticalement une structure à parallélogrammes déformables portant une nacelle. Le véhicule est également pourvu de roues ferroviaires rétractables d'axes perpendiculaires aux chenilles. Le véhicule peut ainsi monter sur les rails perpendiculairement à elles et s'arrêter sur celles-ci pour permettre aux roues de prendre appui sur les rails et de porter le véhicule en se substituant aux chenilles. Ces véhicules mixtes pourvus d'une nacelle sont d'un emploi beaucoup plus aisé que les véhicules purement ferroviaires. Néanmoins, il est nécessaire d'amener le véhicule aux abords des voies, les chenilles ne lui permettant pas de parcourir des distances supérieures à quelques centaines de mètres, obligeant à prévoir des moyens logistiques importants. Un autre véhicule mixte qui peut circuler indifféremment sur une voie ferrée, la route ou un chemin est divulgué dans le document WO2011/129752A1.

Un premier but de l'invention est de fournir un véhicule qui soit pratique et polyvalent, c'est-à-dire utilisable facilement dans différents environnements.

A cet effet, on prévoit, selon l'invention, un véhicule articulé comprenant une première partie de châssis articulée autour d'un axe à une deuxième partie de châssis reliée à la première partie de châssis par au moins un vérin d'orientation relative des parties de châssis, chacune des parties de châssis étant équipée de roues routières et de roues ferroviaires définissant un plan d'appui du véhicule perpendiculaire à l'axe d'articulation ainsi que d'un mécanisme de substitution des roues ferroviaires aux roues routières et inversement. Le véhicule comprend un poste de pilotage solidaire de la première partie de châssis et un ensemble de motorisation d'au moins une partie des roues, l'ensemble de motorisation comprenant un moteur thermique et un moteur électrique qui sont reliés en parallèle à une pompe hydraulique d'un circuit hydraulique d'entraînement en rotation des roues routières et d'alimentation d'au moins un actionneur d'au moins un équipement du véhicule, le moteur électrique est en outre connecté à des accumulateurs d'énergie électrique selon la revendication 1.

Le véhicule de l'invention peut ainsi circuler indifféremment sur une voie ferrée, la route ou un chemin. Son châssis articulé est relativement simple et robuste et lui permet de passer des abords de la voie ferrée à la voie ferrée elle-même sur une très courte distance. En outre, le franchissement des rails pour monter sur la voie ferrée ou la quitter engendre des contraintes importantes qui sont bien supportées par le véhicule compte tenu de sa structure articulée. Le mode d'alimentation avec deux types d'énergie assurant un fonctionnement autonome du véhicule est particulièrement bien adapté à ce type de véhicule susceptible d'intervenir dans des zones confinées ou sur un tronçon de voie non pourvu de caténaire.

Un deuxième but de l'invention est de fournir un moyen pour faciliter l'acheminement d'un bras télescopique sur un chantier d'installation, de réparation ou de maintenance d'un équipement d'infrastructure ferroviaire en hauteur.

A cet effet, on prévoit, selon l'invention, un véhicule articulé comprenant une première partie de châssis articulée autour d'un axe à une deuxième partie de châssis reliée à la première partie de châssis par au moins un vérin d'orientation relative des parties de châssis, chacune des parties de châssis étant équipée de roues routières et de roues ferroviaires définissant un plan d'appui du véhicule perpendiculaire à l'axe d'articulation ainsi que d'un mécanisme de substitution des roues ferroviaires aux roues routières et inversement, le véhicule comprenant un poste de pilotage solidaire de la première partie de châssis, un bras articulé ayant une première extrémité montée sur la deuxième partie de châssis à pivotement en site et en élévation et une deuxième extrémité pourvue d'une nacelle et un ensemble de motorisation d'au moins une partie des roues et du bras articulé.

Le véhicule de l'invention peut circuler indifféremment sur une voie ferrée, la route ou un chemin. Son châssis articulé est relativement simple et robuste et lui permet de passer des abords de la voie ferrée à la voie ferrée elle-même sur une très courte distance. En outre, le franchissement des rails pour monter sur la voie ferrée ou la quitter engendre des contraintes importantes qui sont bien supportées par le véhicule compte tenu de sa structure articulée. Cette structure facilite l'acheminement du bras articulé sur le tronçon de voie ferrée sur lequel doit avoir lieu l'intervention.

Avantageusement, le bras articulé comprend au moins un segment télescopique.

L'invention comprend également un véhicule articulé comprenant une première partie de châssis articulée autour d'un axe à une deuxième partie de châssis reliée à la première partie de châssis par au moins un vérin d'orientation relative des parties de châssis, chacune des parties de châssis étant équipée de roues routières et de roues ferroviaires définissant un plan d'appui du véhicule perpendiculaire à l'axe d'articulation ainsi que d'un mécanisme de substitution des roues ferroviaires aux roues routières et inversement, le véhicule comprenant un poste de pilotage solidaire de la première partie de châssis et un ensemble de motorisation d'au moins une partie des roues, l'ensemble de motorisation comprenant un moteur thermique et un moteur électrique fonctionnellement reliés en parallèle aux roues routières du véhicule, le moteur électrique est en outre connecté à des accumulateurs d'énergie électrique, le véhicule comprenant une première pompe hydraulique entrainée fonctionnellement par le moteur thermique et fonctionnellement reliée à un circuit d'alimentation d'au moins un actionneur d'au moins un équipement du véhicule.

L'autonomie du véhicule est accrue lorsqu'il comprend une deuxième pompe hydraulique entrainée fonctionnellement par le moteur thermique et fonctionnellement reliée à un moteur hydraulique d'entrainement d'une génératrice électrique.

Avantageusement, la génératrice électrique est reliée à un circuit électrique du véhicule via un chargeur relié aux accumulateurs d'énergie électrique.

Selon un mode de réalisation particulièrement intéressant, le véhicule comprend une centrale électrohydraulique alimentée par les accumulateurs d'énergie électrique et reliée au circuit d'alimentation d'au moins un actionneur d'au moins un équipement du véhicule.

D'autres caractéristiques et avantages de l'invention ressortiront à la lecture de la description qui suit des modes de réalisation particuliers non limitatifs de l'invention.

Il sera fait référence aux dessins annexés, parmi lesquels :
- la figure 1 est une vue de côté d'un véhicule selon un premier mode de réalisation de l'invention ;
- la figure 2 est une vue de dessus de ce véhicule ;
- la figure 3 est une vue en perspective montrant notamment le dessous du véhicule ;
- la figure 4 est une de face du véhicule avec le bras déployé ;
- la figure 5 est une vue en perspective du véhicule de trois quart arrière ;
- la figure 6 est une vue de dessus du véhicule montrant le débattement du bras télescopique ;
- les figures 7 et 8 sont des vues de détail montrant des moyens de limitation du pivotement du bras, respectivement en position active et en position inactive ;
- la figure 9 est une vue en perspective et en transparence d'un dispositif de sélection de conducteurs électriques pour la mise à l'équipotentialité ;
- la figure 10 est une vue de détail d'un archet porté par le véhicule et destiné à frotter sur une caténaire ;
- la figure 11 est une représentation schématique de la motorisation d'un deuxième mode de réalisation de l'invention.

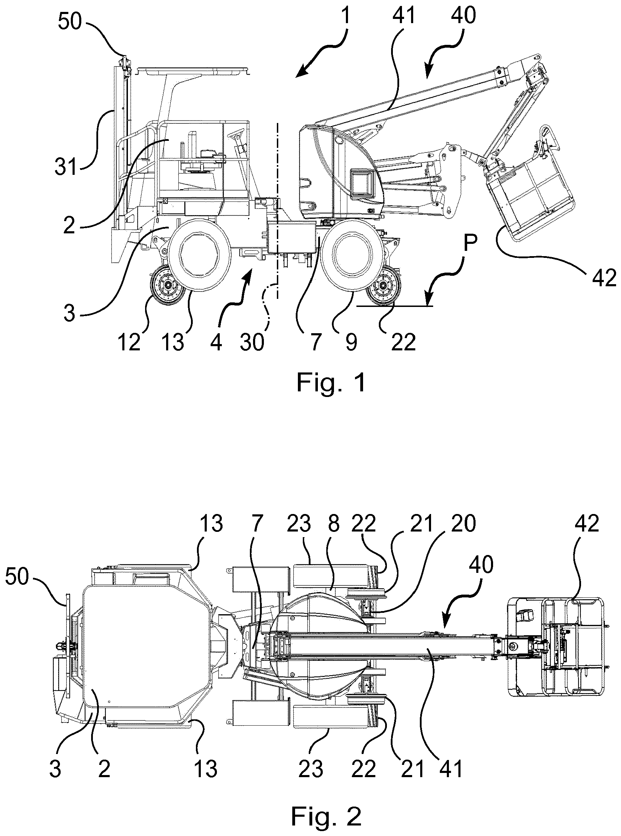

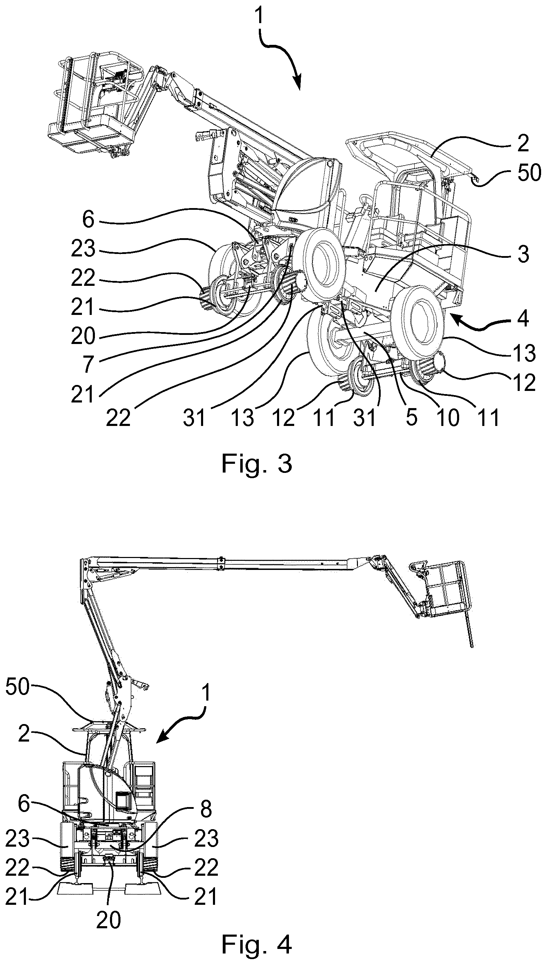

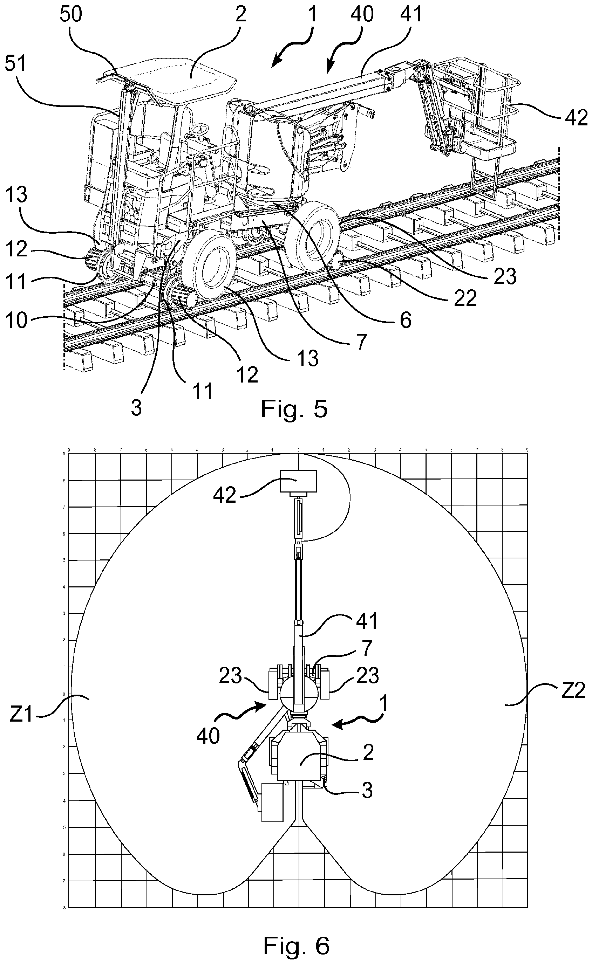

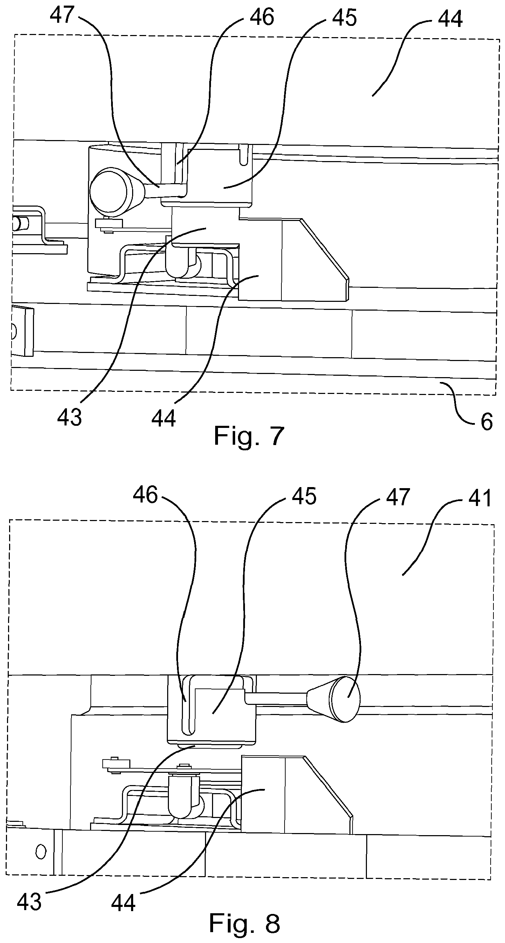

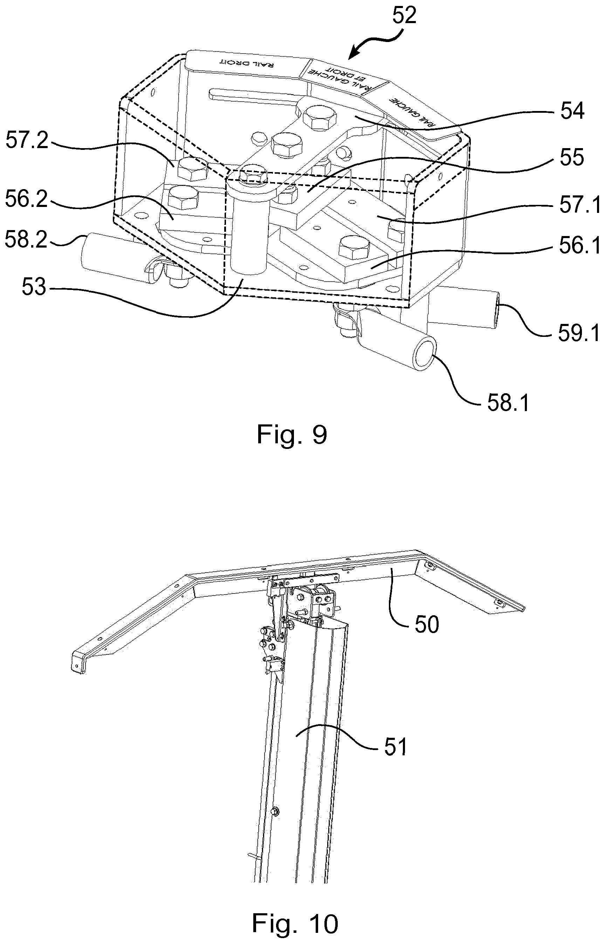

En référence aux figures 1 à 10, le véhicule de l'invention, généralement désigné 1, comprend :
- un châssis, généralement désigné en 4, ayant une première partie ou partie arrière 3 et une deuxième partie ou partie avant 7 articulées l'une à l'autre autour d'un axe d'articulation 30 du véhicule 1 s'étendant selon une direction sensiblement orthogonale à un plan d'appui P du véhicule 1 sur le sol ;
- un essieu moteur arrière 5 qui est muni de roues 13 de type routier et qui est monté sous la partie arrière 3 ;
- un essieu moteur avant 8 qui est muni de roues 23 de type routier et qui est monté sous la partie avant 7 ;
- une cabine 2 qui est solidaire de la partie arrière 3 du châssis 4 et qui est pourvue d'une échelle d'accès à l'arrière ;
- une plateforme technique 6 qui est solidaire de la partie avant 7 du châssis 4.

Des vérins 31 d'orientation s'étendent depuis la partie arrière 3 du châssis 4 vers la partie avant 7 du châssis 4 pour permettre de régler l'orientation de la partie avant 7 par rapport à la partie arrière 4 et donc ainsi de diriger le véhicule. Les vérins 31 assurent également un blocage de la direction.

Le véhicule comprend un ensemble de motorisation des roues 13, 23. L'ensemble de motorisation comprenant un moteur thermique 60 et un moteur électrique 70 reliés en parallèle à une pompe hydraulique d'un circuit hydraulique d'entraînement en rotation des roues 13, 23 et d'alimentation d'au moins une partie des actionneurs du véhicule dont les vérins 31. Le moteur thermique est ici un moteur à combustion interne de type Diesel et possède un circuit de carburant raccordé à un réservoir de gasoil. Le moteur électrique est lui connecté via un circuit électrique 71 comprenant un convertisseur/variateur 72 à des accumulateurs d'énergie électrique 73 qui sont également utilisés pour l'alimentation d'autres équipements purement électriques tels que l'unité de commande du véhicule et les feux de signalisation du véhicule.

Le véhicule selon l'invention est ici un véhicule mixte ferroviaire/routier et comprend à cette fin :
- un essieu ferroviaire arrière 10 pourvu de roues ferroviaires 11 entraînées en rotation par des tambours d'entraînement arrière 12 ;
- un essieu ferroviaire avant 20 pourvu de roues ferroviaires 21 entraînées en rotation par un tambour d'entraînement avant 22.

Les essieux ferroviaires arrière 10 et avant 20 (couramment appelés « lorry ») sont respectivement articulés sur les parties arrière 3 et avant 7 du châssis 4 et respectivement actionnés par deux vérins arrière (non visibles sur les figures) de déploiement d'essieu ferroviaire arrière 10 et deux vérins avant (non visibles sur les figures) de déploiement d'essieu ferroviaire avant 20. Les essieux ferroviaires arrière 10 et avant 20 du véhicule 1 sont ainsi déplaçables entre une position déployée et une position escamotée.

Lorsque les tiges des vérins arrière et avant se déploient, les essieux ferroviaires 5 et 8 viennent, dans un premier temps, au contact du sol (généralement, cette manœuvre est déclenchée lorsque le véhicule 1 a son axe longitudinal aligné sur une voie ferrée, et les roues ferroviaires 11 et 21 viennent prendre appui sur les bandes de roulage des rails) et soulèvent le véhicule 1 de manière à ce que les roues 13, 23 ne soient plus en contact avec le sol. Les essieux ferroviaires arrière 10 et avant 20 poursuivent ensuite, dans un deuxième temps, leurs mouvements jusqu'à ce que les tambours d'entraînement arrière 12 viennent au contact des roues 13 de l'essieu moteur 5 et que les tambours d'entraînement avant 22 viennent au contact des roues 23 de l'essieu moteur 8. Une fois que les tambours d'entraînement 12 et 22 sont au contact des roues 13 et 23, les rotations et freinage des roues 13 et 23 des essieux moteurs 5 et 8 sont directement transmis aux roues ferroviaires 11 et 21. Ainsi, après déploiement des essieux arrière 5 et avant 8, le véhicule 1 peut évoluer sur les bandes de roulage d'une voie ferrée, les vérins d'orientation 31 étant alors commandés pour bloquer la direction du véhicule en ligne droite. Avantageusement, les essieux ferroviaires arrière 10 et avant 20 peuvent, comme les essieux moteurs 5 et 8, également être équipés de leur propre dispositif de freinage, par exemple des freins à tambour. Les freins des essieux ferroviaires sont avantageusement agencés pour être actifs en l'absence d'énergie, c'est-à-dire qu'un élément élastique rappelle les mâchoires en position de freinage et qu'un élément commandé, comme un piston, s'oppose à l'effort de rappel lorsqu'il est alimenté en énergie.

Lorsque les tiges des vérins de déploiement arrière et avant se rétractent, les essieux ferroviaires 10 et 20 sont amenés dans leur position escamotée dans laquelle les roues 13 et 23 des essieux moteur 5 et 8 sont en contact avec le sol et les tambours d'entraînement 12 et 22 des roues ferroviaires 11 et 21 ne sont pas en contact avec les roues 13 et 23 des essieux moteur 5 et 8. Dans cette configuration, le véhicule 1 peut circuler sur les routes, chemins ou en tout-terrain.

On notera que le véhicule est équipé de capteurs de position des essieux ferroviaires 10, 20. L'unité de commande du véhicule considère le véhicule en position route lorsque les capteurs détectent que les essieux ferroviaires 10, 20 sont en position escamotée : l'unité de commande autorise alors le pilotage des vérins d'orientation 31 pour modifier l'orientation de la partie avant par rapport à la partie arrière 3 du châssis 4. L'unité de commande du véhicule considère le véhicule en position ferroviaire lorsque les capteurs détectent que les essieux ferroviaires 10, 20 sont en position déployée : l'unité de commande bloque alors les vérins d'orientation 31 de manière que la partie avant 7 et la partie arrière 3 du châssis 4 soient alignées l'une avec l'autre. Des capteurs de position de la tige des vérins d'orientation 31 informent l'unité de commande de l'arrivée des tiges dans cette position. De préférence, ces capteurs sont agencés pour détecter la position de la tige le long de toute la course de celle-ci. Ces capteurs sont par exemple des capteurs inductifs. Il est de plus prévu ici un capteur spécifique monté sur la partie arrière 3 et/ou la partie avant 7 pour détecter la position alignée des parties avant 7 et arrière 3 du châssis 4.

Le véhicule est ici équipé d'un module technique généralement désigné en 40 et solidaire de la plateforme technique 6 et qui Le module technique 40 comprend un bras articulé 41 ayant une première extrémité solidaire d'une embase rotative montée sur la platine inférieure du module technique 40 à pivotement circulaire (c'est-à-dire parallèlement au plan d'appui) et en élévation (c'est-à-dire dans un plan perpendiculaire au plan d'appui) et une deuxième extrémité pourvue d'une nacelle 42. Le bras articulé 41 comprend plusieurs segments articulés dont ici l'un est télescopique. La nacelle 42 est équipée d'une télécommande permettant de commander le bras articulée 41.

Le module comprend des moyens pour définir une première zone Z1 de pivotement du bras articulé et une deuxième zone Z2 de pivotement du bras articulé. Les zones Z1 s'étendent respectivement sur deux côtés opposés du véhicule de part et d'autre de l'axe longitudinal de celui-ci. Le véhicule comprend également des moyens pour sélectivement autoriser ou interdire le pivotement du bras dans chacune des zones de pivotement du véhicule.

Plus précisément, les moyens de définition des zones de pivotement comportent deux taquets 43, symétriquement opposés, montés sur l'embase rotative pour coulisser entre une position sortie et une position escamotée et des butées 44 fixées à la platine inférieure en des positions écartées l'une de l'autre pour définir les frontière des zones Z1 et Z2. Les butées 44 s'opposent au pivotement de l'embase rotative du bras 41 hors d'une des zones Z1, Z2 lorsque l'un des taquets 43 est en position sortie et vient en contact de l'une ou l'autre des butées 44. Au contraire, lorsque les taquets 43 sont en position escamotée, ils ne peuvent rencontrer les butées 44 laissant libre le pivotement du bras 41.

Les taquets 43 forment ainsi des butées escamotables et les moyens pour sélectivement autoriser ou interdire comprennent un mécanisme d'escamotage des taquets 43. Chacun des taquets 43 est ici un cylindre reçu à pivotement et à coulissement dans un fourreau 45 pourvu d'une rainure 46 en baïonnette. Un levier 47 formant un mécanisme d'escamotage s'étend en saillie radiale du taquet 43 et possède une portion qui s'étend en saillie à l'extérieur du fourreau en passant par la rainure 46. Cette portion permet à un opérateur de déplacer le taquet 43 entre ses deux positions.

Le module technique 40 comporte également, de manière optionnelle, des connecteurs hydrauliques et/ou électriques permettant de raccorder les actionneurs présents sur le module technique 40 à la source d'énergie appropriée présente dans l'ensemble de motorisation.

Enfin, le module technique 40 comprend également une commande déportée permettant la conduite du véhicule 1 et/ou pouvant être également reliée à l'ensemble des actionneurs et des vérins du module technique 40.

De manière classique, le véhicule 1 et le module technique 40 sont équipés de capteurs de position des éléments mobiles embarqués.

De manière classique, le véhicule 1 et le module technique 40 sont équipés de conducteurs électriques de mise à l'équipotentialité des parties conductrices du véhicule et du module technique qui sont susceptibles d'être accidentellement sous tension et en contact avec un utilisateur du véhicule lorsque celui-ci est en position sur une voie ferrée. Les conducteurs électriques de mise à l'équipotentialité assurent la conduction du courant jusqu'à un des rails de la voie ferrée via l'un des essieux ferroviaires et l'une des roues de celui-ci.

Ces conducteurs comprennent un archet 50 supporté par un mât télescopique 51 monté à l'arrière de la partie arrière 3 du châssis 4. L'archet 50 est destiné à venir au contact de la caténaire et est relié par un câble à un des connecteurs d'entrée 58.1, 58.2 d'un dispositif de sélection 52 ayant des connecteurs de sortie 59.1, 59.2 dont l'un est électriquement relié à une des roues ferroviaires en contact avec le rail gauche et l'autre est électriquement relié à une des roues ferroviaires en contact avec le rail droit. D'autres équipements ou parties du véhicule qui sont électriquement conductrice, comme le bras 41, le châssis 4 sont reliés à l'un ou l'autre des connecteurs d'entrée 58.1, 58.2. Le dispositif de sélection 52 comprend un capotage auquel sont fixés les connecteurs 58.1, 58.2, 59.1, 59.2 et qui contient un sélecteur 54 monté pour pivoter entre deux positions extrêmes disposées de part et d'autre d'une position centrale. Dans le capotage, le sélecteur porte un contact mobile 55 et a une extrémité s'étendant en saillie du capotage par une rainure ménagée dans celui-ci. Dans le capotage sont disposés en regard d'une trajectoire du contact mobile 55 des contacts fixes 56.1, 56.2 reliés respectivement aux connecteurs d'entrée 58.1, 58.2 et des contacts fixes 57.1, 57.2 reliés respectivement aux connecteurs de sortie 59.1, 59.2 de telle manière que :
- dans une première position extrême, le contact mobile 55 relie électriquement les contacts fixes 56.1, 56.2 au contact fixe 57.1 ;
- dans une deuxième position extrême, le contact mobile 55 relie électriquement les contacts fixes 56.1, 56.2 au contact fixe 57.2 ;
- dans la position centrale, le contact mobile 55 relie électriquement les contacts fixes 56.1, 56.2 aux contacts fixes 57.1 et 57.2.

Ainsi, le sélecteur de rail est agencé pour permettre d'assurer la mise à l'équipotentialité au choix vers le rail de droite, le rail de gauche ou les deux rails à la fois.

L'utilisation du véhicule articulé 1 selon l'invention va maintenant être décrite.

Le véhicule articulé 1 aborde par exemple un accès de franchissement aménagé d'une voie ferrée tel qu'une intersection avec une voie routière. Grâce à son rayon de braquage réduit, le véhicule articulé 1 se positionne aisément parallèlement aux rails de la voie ferrée 106 à l'aide des essieux moteurs arrière 4 et avant 8. Une fois le véhicule articulé 1 en position, l'opérateur entame la procédure de déploiement des essieux ferroviaires arrière 10 et avant 20 en commandant le déploiement des tiges des vérins de déploiement. Lorsque les essieux ferroviaires arrière 10 et avant 20 sont déployés, les vérins 31 de blocage de direction sont eux aussi bloqués pour maintenir la partie avant 7 du châssis 4 alignée avec la partie arrière 3. Le véhicule articulé 1 peut alors circuler sur la voie ferrée. Quand le véhicule articulé 1 est parvenu sur la zone d'intervention, le conducteur détermine si le pivotement du bras articulé doit être empêché ou pas dans une des zones Z1, Z2 (tel est le cas par exemple lorsque l'intervention a lieu à côté d'une voie sur laquelle la circulation des trains n'a pas été interrompue). Le conducteur amène alors en position sortie l'un ou l'autre des taquets 43.

Des opérateurs montent ensuite dans la nacelle 42 et commande son déploiement par l'intermédiaire de la télécommande équipant la nacelle 42.

Avantageusement, la télécommande est également reliée à l'unité de commande du véhicule de manière à permettre aux opérateurs montés dans la nacelle 42 de commander les déplacements du véhicule en mode ferroviaire. On notera que le conducteur dispose d'un dispositif d'arrêt d'urgence lui permettant d'arrêter le véhicule quelles que soient les instructions données via la télécommande.

Lorsque les travaux sont achevés, le véhicule articulé 1 se rend par exemple sur l'accès de franchissement aménagé et, en rétractant les essieux ferroviaires arrière 10 et avant 20, peut libérer la voie ferrée.

Les roues 5.1, 5.2, 8.1, 8.2 du véhicule sont de préférence équipées de pneus tout-terrain et le véhicule en position routière a de préférence une résistance mécanique et une hauteur sous châssis lui procurant des aptitudes de franchissement suffisantes pour pouvoir monter sur le ballast et franchir une voie ferrée hors d'un accès de franchissement aménagé.

Le véhicule étant un véhicule mixte ferroviaire/routier, il est agencé pour être conforme aux gabarits standards ferroviaire et routier.

Selon un second mode de réalisation de l'invention, le véhicule 1 comprend un ensemble de motorisation des roues 13, 23 comprenant un moteur thermique 60 et un moteur électrique 70. Le moteur thermique 60 est relié par un embrayage 61 à friction aux roues routières 13 et 23 du véhicule 1. L'arbre du moteur électrique 70 est également relié aux roues routières 13 et 23. Le véhicule 1 comprend également une première pompe hydraulique 62 directement entrainée par le moteur thermique 60 et reliée à un circuit d'alimentation 63 d'au moins une partie des actionneurs du véhicule 1. Ces actionneurs comprennent notamment les vérins 31 d'orientation ainsi que les vérins arrière et avant de déploiement des essieux ferroviaires 5 et 8. Le moteur électrique 70 est relié via un convertisseur/variateur 72 au circuit électrique 71.

Le véhicule 1 comprend également une deuxième pompe hydraulique 64 directement entrainée par le moteur thermique 60 et reliée à un moteur hydraulique 65 d'entrainement d'une génératrice électrique 66. La génératrice électrique 66 est elle-même reliée au circuit électrique 71 via un convertisseur/chargeur 74 relié aux accumulateurs d'énergie électrique 73. Le circuit électrique 71 est agencé pour que la génératrice électrique 66 réalise une charge des accumulateurs d'énergie électrique 73 lorsqu'aucun des équipements reliés au circuit électrique 71 n'est utilisé et alimente ces derniers lorsqu'ils sont utilisés.

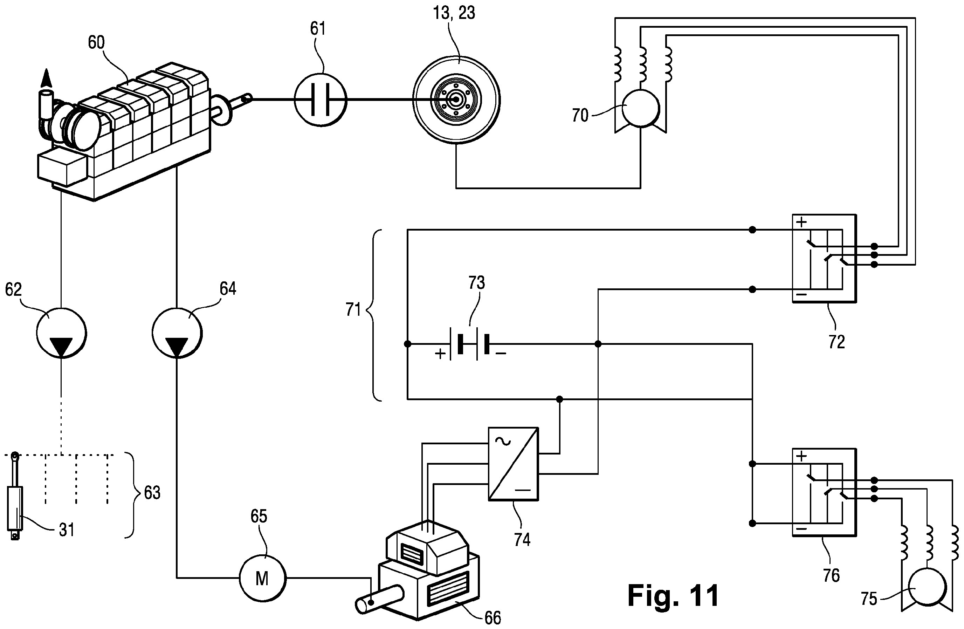

Comme visible en figure 11, le véhicule 1 comprend également une centrale électrohydraulique 75 reliée par un variateur 76 au circuit électrique 71.

En fonctionnement, le véhicule 1 peut adopter une première configuration dans laquelle le moteur thermique 60 est utilisé pour faire tourner les roues routières 13 et 23. Lorsque le moteur thermique 60 fonctionne, la première pompe hydraulique 62 permet, notamment, de commander les vérins d'orientation 31 ainsi que les actionneurs de la nacelle 42. La deuxième pompe hydraulique 64 entraîne le moteur hydraulique 65 qui, via la génératrice électrique 66, recharge les accumulateurs d'énergie électrique 73. L'énergie électrique générée par la génératrice électrique 66 peut également être directement utilisée par les équipements électriques du véhicule 1.

Le véhicule peut également adopter une deuxième configuration lorsque l'utilisation d'un moteur thermique est proscrite (intervention de nuit dans une zone habitée, travaux dans un tunnel, etc..). Dans cette deuxième configuration, l'entrainement des roues routières 13 et 23 est effectué par le moteur électrique 70 alimenté par les accumulateurs d'énergie électrique 73. Les divers équipements hydrauliques du véhicule 1 comme les vérins d'orientation 31 et les actionneurs de la nacelle 42 sont alimentés par la centrale électrohydraulique 75, elle-même alimentée électriquement par les accumulateurs d'énergie électrique 73.

On obtient ainsi un véhicule 1 routier et ferroviaire qui dispose d'une grande autonomie grâce à l'utilisation du moteur thermique 60 et qui peut également intervenir dans des conditions où l'utilisation d'une motorisation électrique est proscrite grâce aux accumulateurs d'énergie électrique 73 et à la configuration particulière de son ensemble de motorisation.

Bien entendu, l'invention n'est bien pas limitée au mode de réalisation décrit mais englobe toute variante entrant dans le champ de l'invention telle que définie par les revendications.

En particulier :
- bien qu'ici chaque essieu ferroviaire soit pourvu de deux tambours d'entrainement par les roues de l'essieu moteur, l'invention s'applique également à des essieux ferroviaires pourvu d'un unique tambour d'entrainement ;
- bien qu'ici l'essieu moteur soit pourvu de pneumatiques, l'invention s'applique également à des essieux moteurs pourvu d'autres types de roues comme par exemple des roues pleines ;
- bien qu'ici le véhicule articulé comprenne un module à bras articulé et que la motorisation thermique/électrique soit particulièrement avantageuse dans ce cas, le véhicule peut comprendre un équipement différent et par exemple un module de dévidage de câble ou un module de grutage ;
- bien qu'ici les moyens de définition des zones de pivotement soient des moyens mécaniques, il est possible d'utiliser des moyens électroniques et informatique comprenant un capteur de rotation du bras en site et un programme informatique, exécuté par l'unité de commande, pour interdire ou autoriser le pivotement du bras à certains angles. En variante, un verrou pneumatique ou électrique peut être utilisé comme taquet mobile ;
- bien qu'ici le bras télescopique soit fixé de manière amovible à la partie avant du châssis, il est possible de le fixer de manière non amovible ;
- bien qu'ici le véhicule articulé comprenne ici un moteur thermique à combustion interne de type Diesel, le moteur thermique peut être un moteur à allumage commandé ou un moteur à gaz ;
- bien qu'ici l'ensemble des vérins soit des vérins hydrauliques, l'invention s'applique également à d'autres types d'actionneurs comme par exemple des vérins électriques ou pneumatiques, ou des actionneurs d'autre nature comme des actionneurs rotatifs ;
- le véhicule peut comprendre des moyens de rechargement des accumulateurs, comprenant par exemple un alternateur entraîné par le moteur thermique ;
- bien qu'ici le moteur thermique soit relié aux roues du véhicule par un embrayage à friction, l'invention s'applique également à d'autres moyens de relier fonctionnellement le moteur thermique aux roues routières du véhicule comme par exemple un embrayage à fluide, des crabots ou un accouplement par induction ;
- bien qu'ici le moteur thermique soit relié aux roues du véhicule, l'invention s'applique également à une liaison du moteur thermique à une unique roue routière ;
- bien qu'ici les première et deuxième pompes hydrauliques soient reliées directement au moteur thermique, l'invention s'applique également à d'autres moyens de relier fonctionnellement les pompes hydrauliques au moteur thermique, comme par exemple à l'aide d'un embrayage à friction, à fluide, des crabots ou un accouplement par induction ;
- bien qu'ici le moteur électrique soit relié via un convertisseur/variateur au circuit électrique, l'invention s'applique également à d'autres moyens de liaison du moteur électrique au circuit électrique comme par exemple un convertisseur indépendant du variateur ou un régulateur de tension ;
- bien qu'ici la génératrice électrique soit reliée à un moteur hydraulique d'entrainement, l'invention s'applique également à d'autres moyens de relier la génératrice à la deuxième pompe hydraulique, la génératrice peut par exemple incorporer le moteur hydraulique.

## Revendications

1. Véhicule articulé (1) comprenant une première partie de châssis (3) articulée autour d'un axe (30) à une deuxième partie de châssis (7) reliée à la première partie de châssis par au moins un vérin (31) d'orientation relative des parties de châssis, chacune des parties de châssis étant équipée de roues routières (13, 23) et de roues ferroviaires (11, 21) définissant un plan d'appui (P) du véhicule perpendiculaire à l'axe d'articulation ainsi que d'un mécanisme de substitution des roues ferroviaires aux roues routières et inversement, le véhicule comprenant un poste de pilotage (2) solidaire de la première partie de châssis et un ensemble de motorisation d'au moins une partie des roues, l'ensemble de motorisation comprenant un moteur thermique (60) et un moteur électrique (70) fonctionnellement reliés en parallèle aux roues routières (13, 23)du véhicule (1), le moteur électrique (70) est en outre connecté à des accumulateurs d'énergie électrique (73), le véhicule (1) comprenant une première pompe hydraulique (62) entrainée fonctionnellement par le moteur thermique (60) et fonctionnellement reliée à un circuit d'alimentation (63) d'au moins un actionneur (31) d'au moins un équipement (42) du véhicule (1), le véhicule
comprenant une deuxième pompe hydraulique (64) entrainée fonctionnellement par le moteur thermique (60) et fonctionnellement reliée à un moteur hydraulique (65) d'entrainement d'une génératrice électrique.

2. Véhicule articulé (1) selon la revendication 1, dans lequel la génératrice électrique (66) est reliée à un circuit électrique (71) du véhicule (1) via un chargeur (74) relié aux accumulateurs d'énergie électrique (73).

3. Véhicule articulé (1) selon l'une quelconque des revendications précédentes, comprenant une centrale électrohydraulique (75) alimentée par les accumulateurs d'énergie électrique (73) et reliée au circuit d'alimentation (63) d'au moins un actionneur (31) d'au moins un équipement (42) du véhicule (1).

4. Véhicule articulé (1) selon l'une quelconque des revendications précédentes, dans lequel l'équipement comprend un bras articulé (41) ayant une première extrémité montée sur la deuxième partie de châssis (7) à pivotement circulaire et en élévation et une deuxième extrémité pourvue d'une nacelle (42).

5. Véhicule articulé (1) selon la revendication 4, le bras articulé (41) comprend au moins un segment télescopique.

6. Véhicule articulé (1) selon l'une quelconque des revendications précédentes, comprenant des moyens pour définir une première zone (Z1) de pivotement du bras articulé (41) et une deuxième zone (Z2) de pivotement du bras articulé s'étendant respectivement sur deux côtés opposés de la deuxième partie de châssis (7) et des moyens pour sélectivement autoriser ou interdire le pivotement du bras dans chacune des zones de pivotement du véhicule.

7. Véhicule articulé (1) selon la revendication 6, dans lequel les moyens de définition des zones de pivotement comportent des butées écartées l'une de l'autre et s'opposant au pivotement du bras pour définir entre elles une zone de pivotement et les moyens pour sélectivement autoriser ou interdire comprennent un mécanisme d'escamotage des butées.

8. Véhicule articulé (1) selon l'une quelconque des revendications précédentes, comprenant deux essieux moteurs (5, 8) portant chacun deux roues routières (13, 23) et le mécanisme de substitution comprend deux essieux ferroviaires (10, 20) portant chacun deux des roues ferroviaires (11, 21) et au moins un tambour (12, 22) d'entraînement en rotation des roues ferroviaires, chaque essieu ferroviaire étant monté sur la partie de châssis correspondante pour être mobile entre une position déployée dans laquelle le tambour d'entraînement (12, 22) vient au contact d'au moins une roue routière (13, 23), les roues routières (13, 23) n'étant plus en contact avec le sol lorsque les essieux ferroviaires (10, 20) sont en position déployée, et une position rétractée dans laquelle les roues ferroviaires sont escamotées par rapport aux roues routières.

9. Véhicule articulé (1) selon l'une quelconque des revendications précédentes, dans lequel la deuxième partie de châssis comprend une plateforme technique pourvue de moyens pour la fixation amovible d'un module pourvu d'un équipement et de moyen de raccordement d'au moins un actionneur de l'équipement au circuit hydraulique.

10. Véhicule articulé (1) selon l'une quelconque des revendications précédentes, dans lequel le moteur thermique est un moteur à combustion interne de type Diesel.

## Patentansprüche

1. Gelenkfahrzeug (1), umfassend einen ersten Chassisteil (3), der um eine Achse (30) an einem zweiten Chassisteil (7) angelenkt ist, der mit dem ersten Chassisteil über mindestens einen Zylinder (31) zur relativen Ausrichtung der Chassisteile verbunden ist, wobei jeder der Chassisteile mit Straßenrädern (13, 23) und mit Eisenbahnrädern (11, 21) ausgestattet ist, die eine Auflageebene (P) des Fahrzeugs senkrecht zur Gelenkverbindungsachse definieren, sowie mit einem Mechanismus zum Austausch der Eisenbahnräder gegen die Straßenräder und umgekehrt, wobei das Fahrzeug einen Führerstand (2) umfasst, der fest mit dem ersten Chassisteil verbunden ist, und eine Motorisierungseinheit zur Motorisierung mindestens eines Teils der Räder, wobei die Motorisierungseinheit eine Brennkraftmaschine (60) und einen Elektromotor (70) umfasst, die funktionell parallel mit den Straßenrädern (13, 23) des Fahrzeugs (1) verbunden sind, wobei der Elektromotor (70) ferner mit Akkumulatoren (73) für elektrische Energie verbunden ist, wobei das Fahrzeug (1) eine erste Hydraulikpumpe (62) umfasst, die funktionell von der Brennkraftmaschine (60) angetrieben wird und funktionell mit einem Versorgungskreis (63) zur Versorgung mindestens eines Aktors (31) mindestens einer Ausrüstung (42) des Fahrzeugs (1) verbunden ist, wobei das Fahrzeug eine zweite Hydraulikpumpe (64) umfasst, die funktionell von der Brennkraftmaschine (60) angetrieben wird und funktionell mit einem Hydraulikmotor (65) zum Antrieb eines Elektrogenerators verbunden ist.

2. Gelenkfahrzeug (1) nach Anspruch 1, bei dem der Elektrogenerator (66) mit einem Stromkreis (71) des Fahrzeugs (1) über ein Ladegerät (74) verbunden ist, das mit den Akkumulatoren (73) für elektrische Energie verbunden ist.

3. Gelenkfahrzeug (1) nach einem der vorhergehenden Ansprüche, umfassend eine elektrohydraulische Zentrale (75) die von den Akkumulatoren (73) für elektrische Energie versorgt wird und mit dem Versorgungskreis (63) zur Versorgung mindestens eines Aktors (31) mindestens einer Ausrüstung (42) des Fahrzeugs (1) verbunden ist.

4. Gelenkfahrzeug (1) nach einem der vorhergehenden Ansprüche, bei dem die Ausrüstung einen Gelenkarm (41) umfasst, der ein erstes Ende hat, das an dem zweiten Chassisteil (7) zur kreisförmigen Schwenkbewegung und zur Hubbewegung montiert ist, sowie ein zweites Ende, das mit einer Gondel (42) versehen ist.

5. Gelenkfahrzeug (1) nach Anspruch 4, bei dem der Gelenkarm (41) mindestens ein Teleskopsegment umfasst.

6. Gelenkfahrzeug (1) nach einem der vorhergehenden Ansprüche, umfassend Mittel zum Definieren eines ersten Schwenkbereichs (Z1) des Gelenkarms (41) und eines zweiten Schwenkbereichs (Z2) des Gelenkarms, die sich auf zwei entgegengesetzten Seiten des zweiten Chassisteils (7) erstrecken, und Mittel zum selektiven Zulassen oder Untersagen des Verschwenkens des Arms in jedem der Schwenkbereiche des Fahrzeugs.

7. Gelenkfahrzeug (1) nach Anspruch 6, bei dem die Mittel zum Definieren der Schwenkbereiche Anschläge umfassen, die zueinander beabstandet sind und sich dem Verschwenken des Arms widersetzen, um zwischen sich einen Schwenkbereich zu definieren, und die Mittel zum selektiven Zulassen oder Untersagen einen Mechanismus zum Einfahren der Anschläge umfassen.

8. Gelenkfahrzeug (1) nach einem der vorhergehenden Ansprüche, umfassend zwei Antriebsachsen (5, 8), die jeweils zwei Straßenräder (13, 23) tragen, und der Austauschmechanismus zwei Eisenbahnachsen (10, 20) umfasst, die jeweils zwei Eisenbahnräder (11, 21) und mindestens eine Antriebstrommel (12, 22) zum Drehantrieb der Eisenbahnräder tragen, wobei jede Eisenbahnachse an dem entsprechenden Chassisteil derart montiert ist, dass sie zwischen einer ausgefahrenen Position, in der die Antriebstrommel (12, 22) mit mindestens einem Straßenrad (13, 23) in Kontakt kommt, wobei die Straßenräder (13, 23) mit dem Boden nicht mehr in Kontakt sind, wenn die Eisenbahnachsen (10, 20) in der ausgefahrenen Position sind, und einer eingezogenen Position beweglich sind, in der die Eisenbahnräder in Bezug auf die Straßenräder eingefahren sind.

9. Gelenkfahrzeug (1) nach einem der vorhergehenden Ansprüche, bei dem der zweite Chassisteil eine technische Plattform umfasst, die mit Mitteln für die lösbare Befestigung eines mit einer Ausrüstung versehenen Moduls und mit Mitteln zur Verbindung mindestens eines Aktors der Ausrüstung mit dem Hydraulikkreis versehen ist.

10. Gelenkfahrzeug (1) nach einem der vorhergehenden Ansprüche, bei dem die Brennkraftmaschine ein Diesel-Verbrennungsmotor ist.

## Claims

1. Articulated vehicle (1) including a first chassis part (3) articulated around an axis (30) to a second chassis part (7) connected to the first chassis part by at least one cylinder (31) for relative orientation of the chassis parts, each of the chassis parts being fitted with road wheels (13, 23) and railway wheels (11, 21) defining a support plane (P) of the vehicle perpendicular to the articulation axis, and a mechanism for substituting the railway wheels for the road wheels and vice versa, the vehicle including a driver station (2) secured to the first chassis part and a system for driving at least some of the wheels, the drive system including a combustion engine (60) and an electric motor (70) functionally connected in parallel to the road wheels (13, 23) of the vehicle (1), the electric motor (70) is further connected to electrical energy accumulators (73), the vehicle (1) including a first hydraulic pump (62) driven functionally by the combustion engine (60) and functionally connected to a supply circuit (63) of at least one actuator (31) of at least one item of equipment (42) of the vehicle (1), the vehicle including a second hydraulic pump (64) driven functionally by the combustion engine (60) and functionally connected to a hydraulic motor (65) driving an electric generator.

2. Articulated vehicle (1) according to claim 1, in which the electric generator (66) is connected to an electric circuit (71) of the vehicle (1) via a charger (74) connected to the electrical energy accumulators (73).

3. Articulated vehicle (1) according to either one of the preceding claims, including an electro-hydraulic unit (75) supplied by the electrical energy accumulators (73) and connected to the supply circuit (63) of at least one actuator (31) of at least one item of equipment (42) of the vehicle (1).

4. Articulated vehicle (1) according to any one of the preceding claims, in which the item of equipment includes an articulated arm (41) having a first end mounted on the second chassis part (7) with circular pivoting in elevation and a second end provided with a nacelle (42).

5. Articulated vehicle (1) according to claim 4, the articulated arm (41) includes at least one telescopic segment.

6. Articulated vehicle (1) according to any one of the preceding claims, including means for defining a first pivot zone (Z1) of the articulated arm (41) and a second pivot zone (Z2) of the articulated arm respectively extending on two opposite sides of the second chassis part (7) and means for selectively authorizing or prohibiting pivoting of the arm in each of the pivot zones of the vehicle.

7. Articulated vehicle (1) according to claim 6, in which the means for defining the pivot zones include stops spaced from one another and opposing pivoting of the arm to define between them a pivot zone and the selective authorization or prohibition means include a mechanism for retracting the stops.

8. Articulated vehicle (1) according to any one of the preceding claims, including two driving axles (5, 8) each carrying two road wheels (13, 23), and the substitution mechanism includes two railway axles (10, 20) each carrying two railway wheels (11, 21) and at least one drum (12, 22) for driving rotation of the railway wheels, each railway axle being mounted on the corresponding chassis part to be mobile between a deployed position in which the drive drum (12, 22) comes into contact with at least one road wheel (13, 23), the road wheels (13, 23) no longer being in contact with the ground when the railway axles (10, 20) are in the deployed position, and a retracted position in which the railway wheels are retracted relative to the road wheels.

9. Articulated vehicle (1) according to any one of the preceding claims, in which the second chassis part includes a technical platform provided with means for removably fixing a module provided with an item of equipment and with means for connecting at least one actuator of the item of equipment to the hydraulic circuit.

10. Articulated vehicle (1) according to any one of the preceding claims, in which the combustion engine is a Diesel-type combustion engine.
